**Europäisches Patentamt**

**European Patent Office**

**Office européen des brevets**

(11) Veröffentlichungsnummer: **0 109 496**
**A1**

# EUROPÄISCHE PATENTANMELDUNG

(21) Anmeldenummer: **83108954.5**

(22) Anmeldetag: **10.09.83**

(51) Int. Cl.³: **C 09 C 1/48**
**C 09 C 3/00**

(30) Priorität: **10.11.82 DE 3241537**

(43) Veröffentlichungstag der Anmeldung:
**30.05.84 Patentblatt 84/22**

(84) Benannte Vertragsstaaten:
**AT BE CH DE FR GB IT LI LU NL SE**

(71) Anmelder: **CHEMISCHE WERKE HÜLS AG**
**- RSP Patente / PB 15 - Postfach 13 20**
**D-4370 Marl 1(DE)**

(72) Erfinder: **Heinrich, Lothar, Dr.**
**Geiststrasse 68**
**D-4400 Münster(DE)**

(72) Erfinder: **Czytko, Michael, Dr.**
**Hustadtring 25**
**D-4630 Bochum(DE)**

(54) **Verfahren zum Abtrennen der schlackebildenden Schwermetall-verbindungen aus einer wässrigen Russsuspension.**

(57) Die Erfindung betrifft ein Verfahren zum Abtrennen schlackebildender Schwermetallverbindungen aus einer wäßrigen Rußsuspension, wie sie bei der Synthesegaserzeugung durch Partialvergasung von Schwerölen anfällt. Dabei wird die Rußsuspension zur Agglomerisierung mit Mineralöl behandelt, anschließend pelletisiert und die wäßrige Phase von den Pellets abgetrennt. Dabei verbleibt ein großer Ascheanteil in den Pellets, ein Teil geht in die wäßrige Phase.

Das Verfahren ist daburch gekennzeichnet, daß der Rußsuspension vor der Pelletisierung zunächst nur ein Teil der zur Agglomerisierung von Ruß erforderlichen Mineralölmenge zugesetzt wird und diese Rußsuspension in einer scherkrafterzeugenden Dispergiervorrichtung gezielt mit det erforderlichen Dispergierleistung behandelt wird. Diese Dispergierleistung pro Schervolumen ist abhängig von Verweilzeit und metallspezifischen Faktoren. Durch diese Maßnahme geht ein großer Anteil an Schwermetallasche in die wäßrige Phase und wird von dort abgetrennt.

<u>Verfahren zum Abtrennen der schlackebildenden Schwermetallverbindungen aus einer wäßrigen Rußsuspension</u>

Die Erfindung betrifft ein Verfahren zur Schlackeabtrennung aus Ruß-Schlacke-Agglomeraten in wäßrigen
Suspensionen, wie sie bei der Synthesegasherstellung
anfallen, durch gezielte Einwirkung von veränderlichen
Scherkraftenergien und gleichzeitiger Ausschleusung der
abgetrennten schlackebildenden Schwermetallverbindungen.

Wie bekannt, lassen sich Synthesegase durch partielle
Oxidation von Ölen unterschiedlicher Konsistenz und Beschaffenheit mittels Sauerstoff oder Luft und Wasserdampf herstellen, siehe z. B. "Der Shell-Vergasungsprozeß" von D. Haar und I. E. Vogel in "Gas- und Wasserfach" 19 (1964), 512. Für diesen nicht katalytischen
Partialverbrennungsprozeß liegen die Reaktortemperaturen
bei ca. 1 200 bis 1 600 °C, die Drücke vorzugsweise
bei ca. 40 bis 60 bar. Die Rückgewinnung der Wärme des
rußhaltigen Synthesegases erfolgt in Abhitzekesseln,
daran schließen sich die Wascheinrichtung zur Entfernung
des Rußes sowie die Rußscheideanlage an.
Der bei der Vergasung anfallende Rußanteil von ca.
1 bis 2 % vom Einsatzöl wird mit Kreislaufwasser niedergeschlagen und als Rußslurry ausgetragen, etwa nach
DE-PS 10 76 092. Um den Ruß einer weiteren Verwendung
zuführbar zu machen, wird der wäßrigen Rußsuspension ein
Hilfsmittel, wie z. B. Mineralöl, zugesetzt, das zur Aufnahme des Rußes befähigt ist, und die Mischung aus Rußsuspension und Hilfsmittel zwischen 60 °C und 160 °C
unter Rühren behandelt (siehe GB-PS 846 219 und
DE-PS 10 42 793). Hierdurch werden etwa 10 % der dem Ruß
anhaftenden Schlacke in die wäßrige Phase überführt.
Der Rest verbleibt in den so erzeugten Ruß-Öl-Pellets,
die sich aus ca. 75 % des Hilfsmittels, 15 % Ruß und 10 % Wasser zusammensetzen. Die Ruß-Öl-Pellets werden über Rüttelsiebe vom Kreislaufwasser getrennt.
Lange Zeit wurden diese Pellets lediglich zur Unterfeuerung verwendet. Heute werden sie nach Möglichkeit mit Öl vermischt, homogenisiert und wieder dem Einsatzstoff zugefügt.

Ungünstigerweise haftet am Ruß z. B. in Form von Sulfiden ein wesentlicher Anteil der durch den Einsatzstoff eingetragenen Schwermetalle, insbesondere Verbindungen des Vanadins, Nickels und Eisens.
Mit der Rückführung des Rußes zum Einsatzstoff konzentrieren sich die Schlackeanteile im Einsatzstoff, im Rußwasser, Kreislaufwasser, Abwasser und den Rußpellets auf. Damit verbietet sich eine höhere oder gar 100 %ige Rußrecycle-Rate und ein Teil des anfallenden Vergasungsrußes bzw. der Ruß-Öl-Pellets muß aus der Anlage ausgeschleust werden. Bereits eine niedrige Rußrückführung von < 50 % führt zu einem Anwachsen des Metallpegels in allen Kreislaufströmen und belastet die Vergasungsreaktoren und die nachgeschalteten Anlageteile durch Schlackeablagerungen, Korrosion und Übertragung von Metallcarbonylen.

Es bestehen bereits einige Vorschläge zur Abtrennung der schlackebildenden Komponenten aus einer wäßrigen Rußsuspension. So wird gemäß DE-PS 20 23 978 diese Rußsuspension vor Umsetzung mit dem Hilfsmittel, welches zur Aufnahme des Rußes befähigt ist, mit Luft und/oder Sauerstoff behandelt. Durch diese Vorbehandlung enthalten die anschließend gebildeten Ruß-Hilfsmittel-Agglomerate aber immer noch ca. 30 % ihres ursprünglichen Metallgehaltes.
Zu ähnlichen Ergebnissen gelangt man durch Abbau der Rußpartikeln auf mechanischem Wege, wobei außerdem die Anwendung gezielter, energetisch günstiger und im Hinblick auf eine kritische Schlackekonzentration
betriebssichere Maßnahmen nicht bekannt sind.

Es war daher Aufgabe der Erfindung, insbesondere im
Sinne einer gesamten Rußrückführung ein Verfahren zur
Schlackeabtrennung aus wäßrigen Rußsuspensionen zu
entwickeln, nach dem betriebssicher, gezielt und in
energetisch günstiger Weise bis nahezu schlackenfreie
Pellets entstehen, wobei diese Schlacke sich dann in
der von Pellets befreiten wäßrigen Phase findet und
daraus entfernt werden muß.

Gelöst wurde diese Aufgabe durch Einwirkung gezielter
Scherkräfte auf die Rußsuspension vor der Pelletisierung, wobei sich dann bis ca. 98 % und mehr in der
abgetrennten, wäßrigen Phase befinden und dort über
Filtrationsvorrichtungen usw. abgetrennt werden.

Gegenstand der Erfindung ist daher ein Verfahren zum
Abtrennen der schlackebildenden Schwermetallverbindungen
aus einer wäßrigen Rußsuspension, wie sie bei der Synthesegaserzeugung durch Partialvergasung von Schwerölen
anfällt und wobei diese Rußsuspension in üblicher Weise
mit zur Agglomerisierung von Ruß geeigneten, mit Wasser
nicht mischbaren, organischen Hilfsmitteln unter anschließender Pelletisierung behandelt und die wäßrige
Phase von den Pellets abgetrennt wird, dadurch gekennzeichnet, daß man in die wäßrige Rußsuspension bei
Temperaturen von 80 bis 160 $^{\circ}$C zunächst nur einen
Teil des zur Agglomerisierung von Ruß erforderlichen
Hilfsmittels einspeist und dabei diese Suspension vor der
Pelletisierung in einer scherkrafterzeugenden Dispergiervorrichtung vorbehandelt, anschließend in üblicher Weise
mit weiteren Hilfsmitteln pelletisiert und aus der
wäßrigen Phase die abgetrennte Schlacke ausschleust,
wobei die erforderliche Dispergierleistung abhängig ist einerseits von dem Grad der gewünschten Schlackeabscheidung in der Scherstufe und andererseits von
der Verweilzeit der Rußsuspension in der Scherstufe nach der Formel

$$N = \frac{\text{ß} - a_0 - a_2 \cdot \tau}{a_1}$$

worin

ß = Faktor für die Schlackeabscheidung in der
    Scherstufe,

N = Dispergierleistung in kW pro Liter Schervolumen $(0 < N < 500)$

$\tau$ = Verweilzeit der Rußslurry in Sekunden im
    Schervolumen und

$a_0$, $a_1$, $a_2$ = empirische Faktoren für die Metallspezifität

bedeuten.

Die empirischen Faktoren in Bezug auf Vanadin, Nickel
und Eisen für die Berechnung des Leistungsaufwandes
und zur Erreichung eines bestimmten Abscheidungsgrades
lassen sich auf einfache Weise aus einem Teilstrom
des Rußslurrys durch Bilanzierung der eingetragenen
Schlacke und der nach der Extraktionsstufe in Ruß- und
Wasserphase ausgetragenen Schlacke feststellen.

Die Einwirkung von Scherkräften auf
die Rußsuspension erhöht generell die Trennung von
Schwermetallverbindung und Ruß. Gemäß der empirischen
Formel kann man nun im System ganz gezielt die eben
erforderliche Dispergierleistung je nach erforderlichen
Abscheidegrad, ausführen, was eine große Energieersparnis bedeutet. Insbesondere bei maximal möglichen
Abscheidungsgraden führt diese Energieeinsparung zu
einem beträchtlichen kostensenkenden Ergebnis. Der
wichtigste Vorteil ist aber in der steuerbaren Schlackekonzentration im Gesamtkreislauf im Hinblick auf kritische Konzentration und damit Betriebssicherheit zu sehen.

Die in die wäßrige Phase überführte Schlacke aus den Schwermetallverbindungen wird durch Abtrennen über Filter, Zentrifugen oder Dekanter aus dem System ausgetragen.

Durch die erfindungsgemäße Vorbehandlung werden allgemein aufgrund hoher Scherkräfte von den Rußpartikeln die anhaftenden Schlacketeilchen getrennt und vom Wasser benetzt. Das gleichzeitig hinzugemischte Mineralöl dient aufgrund der lipophilen Eigenschaften des Rußes als zusätzliches Trennmittel und fördert die Ruß-Schlacke-Trennung. Die endgültige Ruß-Schlacke-Trennung erfolgt unter Zugabe weiteren Mineralöls in der nachfolgenden Pelletisierstufe und die Ausschleusung der sich in der wäßrigen Phase befindenden Schlacke über Filter, Zentrifugen oder Dekanter unter Wasserabtrennung. Hierzu wird eine 100 %ige Rußrückführung in den Vergasungsreaktor ohne nennenswerte Anreicherung an schlackebildenden Schwermetallen möglich. Ohne Anwendung der erfindungsgemäßen Vorbehandlung und Ausschleusung der abgetrennten Schlacke werden beispielsweise nur 10 % des in der wäßrigen Rußsuspension vorhandenen Metallanteils von dem Ruß getrennt, so daß zur Vermeidung einer störenden Anreicherung der schlackebildenden Schwermetalle im Einsatzstoff keine oder nur geringe Rückführung des Rußes in den Vergasungsreaktor möglich ist. Bei der erfindungsgemäßen Behandlung der Rußsuspension mit einem hinsichtlich des Energieeintrages variablen, scherkrafterzeugenden Dispergiergerät unter Zugabe eines Teils des Agglomerationsmittels läßt sich bis zu 98 % und mehr - also fast die Gesamtmenge des Metallanteils abtrennen, sofern nachfolgend eine Ausschleusung der Schlacketeilchen aus dem im Kreis geführten Wasser oder eines Teils davon über Filter, Zentrifugen oder Dekanter erfolgt. Dabei ist es vorteilhaft, durch Variation der Drehzahl des scherkrafterzeugenden Dispergiergerätes oder Änderung der Verweildauer der Rußsuspension in dieser Behandlungsstufe
den Energieeintrag gerade so einzustellen, daß bei
100 %iger Rußrückführung je nach Schwermetallgehalt
des Einsatzstoffes gerade soviel Schlacke abgetrennt
und ausgeschleust wird, wie zur Einstellung eines
kritischen, anlagenspezifischen Schwermetallgehaltes
im Reaktor notwendig ist. Hierdurch wird bei 100 %iger
Rußrückführung der Einsatz von Mineralölen mit hohen
Gehalten an Schwermetallen möglich und es werden die Kosten
für den Energieaufwand der Schlackeabtrennung minimiert.
Zusätzlich sind bei vollständiger oder teilweiser Rußrückführung auch Mineralöle mit höheren Schwermetallgehalten einsetzbar, ohne daß mit einer nennenswerten
Belastung des Vergasungsreaktors und der nachgeschalteten
Anlagen gerechnet werden muß.

Beispiel 1

Es wird ein Vakuumrückstandsöl, das 70 ppm Vanadin,
25 ppm Nickel und 12 ppm Eisen enthält, durch unvollständige Verbrennung in Gase umgewandelt. Nach Waschen
der erzeugten Verbrennungsgase mit Wasser erhält man
eine Rußsuspension mit 1,6 Gewichtsprozent Ruß. Wenn
man diese Rußsuspension in der herkömmlichen Weise behandelt, d. h. zu Ruß-Öl-Pellets und Wasser verarbeitet,
stellt man fest, daß die mit dem Einsatzstoff eingeführte Vanadinmenge nach der Pelletisierung zu etwa
90 % in den Ruß-Öl-Pellets und zu etwa 10 % im Wasser
enthalten ist. Nickel wird nur zu 3 % und Eisen zu
12 % in die wäßrige Phase überführt.

Aus Voruntersuchungen mit einem scherkrafterzeugenden
Dispergiergerät ergaben sich folgende metallspezifische,
empirische Faktoren:

| | Vanadin | Nickel | Eisen |
|---|---|---|---|
| $a_0$ | 0,124 | -0,109 | 0,478 |
| $a_1$ | $3{,}719 \cdot 10^{-3}$ | $2{,}996 \cdot 10^{-3}$ | $1{,}136 \cdot 10^{-3}$ |
| $a_2$ | 1,56 | 1,022 | 0,492 |

Wird die gleiche Rußsuspension unter Zugabe von 25 % des zur Rußpelletisierung notwendigen Öls bei 95 °C mit einer Verweilzeit von 0,15 s durch das Dispergiergerät geschickt, das auf eine Leistung von 67 kW pro Liter Dispergiervolumen eingestellt ist, so werden 56 % des ursprünglich am Ruß haftenden Vanadins, 63 % des Eisens und 25 % des Nickels in die wäßrige Phase gebracht.

Beispiel 2

Ein Rückstandsöl, das Vanadin in einer Konzentration von 160 ppm, 32 ppm Eisen und 35 ppm Nickel enthält, wird durch unvollständige Verbrennung in Gase umgewandelt. Die dabei anfallende wäßrige Rußsuspension enthält 0,8 Gewichtsprozent Ruß, der vollständig in den Reaktor zurückgeführt wird.
Erfahrungen mit der Anlage zeigten, daß die Überschreitung von 580 ppm Vanadin und 110 ppm Nickel im Einsatzstoff zu Ablagerungen, Verstopfungen und zum Stillstand der Anlage führen. Aus Bilanzierung der Schwermetallströme im Ruß- und Waschwasserkreislauf resultieren hieraus die Mindestabscheidungsgrade in der Scherstufe ß (Vanadin) = 0,25 und ß (Nickel) = 0,3.
Wie sich nach der erfindungsgemäßen Beziehung im vorliegenden Verfahren und für das im Beispiel 1 verwendete Dispergiergerät für die energetisch aufwendigere Nickelabtrennung errechnet, wurde an der Dispergiereinrichtung eine Leistungsaufnahme von 96 kW pro Liter Dispergiervolumen und eine Verweilzeit der Rußsuspension von 0,12 s eingestellt und bei 95 °C 25 % des zur Rußextraktion notwendigen Mineralöls zugemischt. Gleichzeitig wurden aus dem Wasserkreislauf etwa 40 % des Kreislaufwassers über Filter geleitet, die sämtliche darin mitgeführten festen Schlackepartikel zurückhalten. Im stationären Zustand der Anlage stellten sich im Einsatzstoff eine Vanadinkonzentration von 216 ppm, ein Nickelgehalt von 108 ppm und eine Eisenkonzentration von 49 ppm ein, was den Abscheidungsgraden ß (Vanadin) = 0,67, ß (Nickel) = 0,32 und ß (Eisen) = 0,65 entspricht.

## Beispiel 3

In eine Anlage wie in Beispiel 2 wurde ein Einsatzstoff mit 292 ppm Vanadin eingefahren. Um eine bestimmte Menge eines besonders Vanadin-armen Rußes herzustellen, wurde ein Teilstrom des Rußslurrys durch eine nicht im Kreislauf befindliche Dispergiereinrichtung und Extraktionsstufe geführt. Der Restgehalt an Vanadin in diesem Ruß sollte unter 20 ppm liegen, was einen Abtrennungsgrad von mindestens 0,94 erfordert. Bei einer Verweilzeit von 0,3 s innerhalb des Dispergiergerätes wurden 104 kW pro Liter Verweilzeitvolumen aufgewendet, was einem Energieaufwand für ß (Vanadin) = 0,98 entspricht. Tatsächlich wurden 99 % des ursprünglich am Ruß anhaftenden Vanadins in die wäßrige Phase überführt.

0109496

Patentanspruch:

1. Verfahren zum
Abtrennen der schlackebildenden Schwermetallverbindungen aus einer wäßrigen Rußsuspension, wie
sie bei der Synthesegaserzeugung durch Partialvergasung von Schwerölen anfällt und wobei diese
Rußsuspension in üblicher Weise mit zur Agglomerisierung von Ruß geeigneten, mit Wasser nicht mischbaren, organischen Hilfsmitteln unter anschließender Pelletisierung behandelt und die wäßrige Phase
von den Pellets abgetrennt wird,
dadurch gekennzeichnet,
daß man in die wäßrige Rußsuspension bei Temperaturen von 80 bis 160 °C zunächst nur einen Teil
des zur Agglomerisierung von Ruß erforderlichen
Hilfsmittels einspeist und dabei diese Suspension
vor der Pelletisierung in einer scherkrafterzeugenden
Dispergievorrichtung vorbehandelt, anschließend in
üblicher Weise mit weiteren Hilfsmitteln pelletisiert
und aus der wäßrigen Phase die abgetrennte Schlacke
ausschleust, wobei die erforderliche Dispergierleistung abhängig ist einerseits von dem Grad der
gewünschten Schlackeabscheidung in der Scherstufe
und andererseits von der Verweilzeit der Rußsuspension in der Scherstufe nach der Formel

$$N = \frac{ß - a_0 - a_2 \cdot \mathcal{J}}{a_1}$$

worin

$ß$ = Faktor für die Schlackeabscheidung in der
Scherstufe,

$N$ = Dispergierleistung in kW pro Liter Schervolumen ($0 < N < 500$)

$\mathcal{J}$ = Verweilzeit der Rußslurry in Sekunden im
Schervolumen und

**0109496**

O.Z. 3852

$a_0$, $a_1$, $a_2$ = empirische Faktoren für die Metallspezifität

bedeuten.

## Europäisches Patentamt

## EUROPÄISCHER RECHERCHENBERICHT

### EINSCHLÄGIGE DOKUMENTE

| Kategorie | Kennzeichnung des Dokuments mit Angabe. soweit erforderlich. der maßgeblichen Teile | Betrifft Anspruch | KLASSIFIKATION DER ANMELDUNG (Int Cl ³) |
|---|---|---|---|
| A | DE-B-1 208 842 (BATAAFSE PETROLEUM MAATSCHAPPIJ) | | C 09 C 1/48<br>C 09 C 3/00 |
| A | US-A-2 153 515 (R.R. DENSLOW et al.) | | |
| A | GB-A- 741 135 (JONES GAS PROCESS COMPANY) | | |
| A | GB-A- 834 989 (BATAAFSE PETROLEUM MAATSCHAPPIJ) | | |

RECHERCHIERTE SACHGEBIETE (Int. Cl. ³)

C 09 C 1/48
C 09 C 1/56
C 01 B 3/34
C 09 C 3/00

Der vorliegende Recherchenbericht wurde für alle Patentansprüche erstellt.

| Recherchenort | Abschlußdatum der Recherche | Prüfer |
|---|---|---|
| DEN HAAG | 16-02-1984 | VAN BELLINGEN I. |